# EUROPEAN PATENT APPLICATION

(11) **EP 3 705 770 A1**
(43) Date of publication of application: **09.09.2020**
(21) Application number: 20161724.8
(22) Date of filing: 09.03.2020
(51) Int. Cl.: F16L 55/18, B05D 3/06, B05D 7/22

(54) **APPARATUS AND METHOD FOR CURING OF POLYMER PAINT APPLIED ON INNER SURFACE OF A PIPE**

(30) Priority: 08.03.2019 LV 190014
(71) Applicant: Marineline Baltic, SIA, 1016 Riga (LV)
(72) Inventor: BRUNAVS, Janis, 1016 Riga (LV); BRUNAVS, Krisjanis, 1058 Riga (LV); MOROZOVS, Bruno Valdis, 1046 Riga (LV)
(74) Representative: Kromanis, Artis

(57) **Abstract**

The invention belongs to a coating technology. Apparatus and method are proposed for curing of pipe inner polymer paint coating by combined UV C band and infrared irradiation. The apparatus comprises UV C Hg curing lamp(-s) (2) installed on mechanical centering guide (3), arranged by supports on wheels (4) and electrical and control cable (5). The method for curing of pipe inner polymer paint is implemented by centering UV curing lamp(-s) of the apparatus within the pipe (1) and by dragging or pulling or self-drive of the guide (3) with the lamp(-s) (2) alongside the inner surface of the pipe (1) to be cured.

The invention can be used in medium and large bore pipe production industries and repairs and maintenance of pipes for chemical, oil and gas and drinking and wastewater piping for improving of pipes inner mechanical and chemical resistance properties and reducing flow resistance.

## Description

Invention relates to apparatus and method for processing inner surface of a pipe or other cylindric hollow object, especially for curing of thermoset polymer protective coating or paint applied directly on an inner surface of the pipe. The present invention can be used in pipe manufacturing for oil, gas, water, wastewater and marine industries, as well in pipe manufacturing and repair industries for processing medium and large diameter pipes and curing of inner coating of cylindric storage tanks and tank containers to obtain improvement of the coating chemical resistance and surface mechanical proprieties.

A coating on an inner surface of a pipe considerably defines a corrosion resistance, longevity and costs and time of repair. Properties of coated surface, for example hardness, smoothness and non-sticking considerably influences service life and costs of service. Hard and smooth surface of the pipe decreases gas or fluid flow resistance, decreases sediments and therefore decreases a maintenance frequency and costs.

Smooth and coated surface decreases flow resistance up to 20% (https://www.heraeus.com, http://www.tangentindinc.com) and in result a pumping power. Due to this most of the pipe's inner surfaces are coated or painted (oil, gas, chemical and oil products and water). Most often used and resistant are thermoactivated polymer coatings which are coated using fusion bonded epoxy powder technology (FBE technology) or liquid spraying technology where the paint is sprayed in liquid state and then for curing of the thermoset polymer paint the pipe is heated typically to temperatures above 100 to 120 degrees Celsius for period typically 3h and longer necessary to reach full polymerization. FBE technology is considerably complicated and with high energy consumption, because a process requires heating of a pipe up to 225 to 245 degrees Celsius to provide hard, entirely polymerized inner surface of a pipe. The same disadvantage has heat curing technology also causing considerable energy losses and negative ecological impact.

Wet polymer coating technologically is simple (https://www.airblast.com, https://www.lemmer.com, http://www.tangentindinc.com), but using this technology requires very lengthy heating of the polymer coating as well as a pipe itself to provide complete polymerization of the coating. To achieve aforementioned, the pipe should be heated multiple hours from up to 110 to 140 degrees Celsius (http://www.tangentindinc.com). This procedure is technologically complicated, and it contributes to a greenhouse effect. Heating becomes a real challenge when a heating is performed in cold climatic areas and/or when a pipe is submerged partly or completely into a water.

The present invention is apparatus and method for curing of a polymer paint on hollow object, especially on an inner surface of a pipe. The apparatus comprises a guide, from which in radial direction away from each of the two circumferences of the guide extend at least four legs equipped with the wheels so that the apparatus may move along the hollow object, especially along an inner surface of the pipe. In the front part of the apparatus further comprises wide spectrum low pressure Hg ultraviolet light (UV) lamp for provision of combined UV band C and infrared irradiation of the inner surface of the pipe. The UV lamp is adjustable so that upon insertion of the apparatus into the pipe, the UV lamp is substantially on the same axis as a longitudinal axis of the hollow object, especially the pipe. There are known UV LED irradiation technologies and devices applicable for Curing of rubber impregnated liners - dragged in pipe rubber lining repair inserts. These technologies are using UV B and A LED constructively with rather narrow wave bands and suitable for hardening of rubber of liner inserted or dragged or inflated into the pipe. Examples are disclosed in the following documents: US 20180229404A1, EP3321554A1 and EP1959183A1.

Apparatus with the UV lamp is moved forward along the pipe with a speed that allows irradiate the inner surface of the pipe in order to achieve complete curing of the polymer paint coated surface before the wheels of the apparatus will move on it.

The UV C low pressure wide spectrum Hg lamp is arranged at a front part of the guide in relation to a movement of the apparatus within the pipe and a power and control cable is arranged at an opposite or a rear part of the guide in relation to the UV lamp. The UV lamp is configured to generate combine wide spectrum lamp providing UV C range (UV-C) with wave lengths between 100 nm and 280 nm and infrared radiation.

In another embodiment of the invention the apparatus further comprises auxiliary guide, from which in radial direction away from each of two circumferences of the auxiliary guide extends at least four auxiliary legs, at the each end of which an auxiliary wheel is attached so that the apparatus may move centrally along the inner surface of the pipe. The guide of the apparatus is connected to the auxiliary guide by means of flexible connecting member like cardan. The UV lamp is positioned in the front part of the auxiliary guide to provide the wheels will go over part of the surface already cured. This embodiment is aimed for easy passing pipe bends.

The apparatus aligns the UV lamp on a longitudinal axis of the pipe to be processed and is moved along the pipe on its own power or by external force. Apparatus and its UV lamp movement speed is chosen according to the period of time necessary for curing dependent on a chosen polymer paint and photo initiator and power of the UV lamp and the diameter of a pipe.

The present invention is also a method for curing of a polymer paint on an inner surface of a hollow object, especially a pipe. The method comprises preparation of paint, which involves mixing of paint monomer with a photo initiator. The next step includes application of prepared paint onto an inner surface of the pipe by spray or any other conventional paint application method. The method further comprises a step of applying of a large wave spectrum combined UV C and infrared radiation onto the coating layer which is applied on the inner surface of the pipe using aforementioned apparatus of the present invention.

Proposed method and apparatus provide complete curing of liquid polymer paint applied onto entire inner surface or selected parts like for weld joints of the pipe sections only.

As a polymer coating for UV hardening with added photo initiator can be used a polymer proposed by by Rainer Puchleitner (R.Puchleitner, G.Riess, W.Kern, X-ray induced cationic curing of epoxy-bonded composites, European Polymer Journal, Vol 91, June 2017, 31-45 pp., ISSN 0014-3057), or polymer proposed by Endruweit (A.Endruweit, M.S.Johnson. Curing of composite components by ultraviolet radiation (https://doi.org/10.1002/pc.20166)), or the following polymer proposed by Shi (S.Shi, C.Croutxé-Barghorn, X.Allonas, Photo initiating cationic photopolymerization: On continue push to long wave stages and low light intensities, Progress in Polymer Science 65 (2017) 1-41).

Preparation of the inner surface of the pipe and application of the liquid polymer paint prepared by mixing polymer resin with a photo initiator are performed according to proportions specified by coating material manufacturer.

During hardening the pipe should be ventilated to remove evaporated solvents if any therefore providing gas composition in the pipe below Lover Flammability Level (LFL) and to reduce ozone concentration that absorbs UV radiation.
Fig. 1 illustrates an apparatus for curing of a polymer paint on an inner surface of a pipe (1). The pipe (1) is illustrated with a cut out for sake of clearness.
Fig. 2 illustrates an apparatus with two guides (3) and (3A) that are connected to each other by means of a flexible connecting member (6) for curing of a polymer paint on an inner surface of a pipe (1) for easy passing of pipe bends. Also, in this Fig. 2 the pipe (1) is illustrated with a cut out for sake of clearness.
Fig. 3 illustrates another embodiment of the invention, wherein the apparatus is inserted into the pipe (1) and at front part of the apparatus an UV lamp (2) is arranged.
Fig. 4 illustrates UV lamp (2) in action during its field tests.
Fig. 5 illustrates an apparatus on a guide (3) of which multiple UV lamps (2) are arranged and the guide (3) is rotatable around a longitudinal axis to provide uniform radiation aimed for curing of surfaces of a large diameter of the pipes and other cylindric hollow objects like storage tanks and tank containers.

Other objects and features of the present invention will become apparent when viewed in light of the detailed description of the preferred embodiment when taken in conjunction with the attached drawings and appended claims.

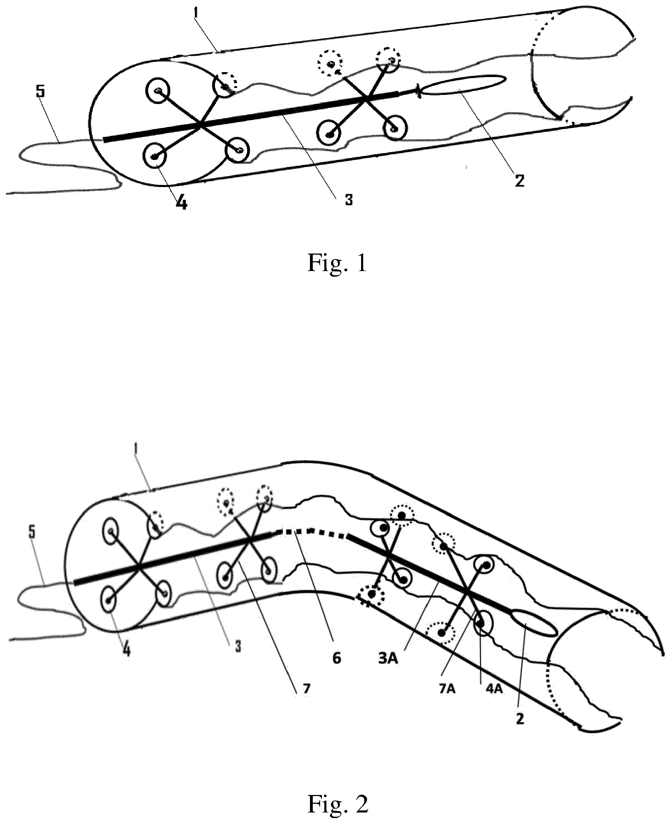

In one of the embodiments, an apparatus for curing of the polymer paint on an inner surface of a pipe (1) comprises a guide (3), from which in radial direction away from the two circumferences of the guide extend eight legs (7), i.e., two pairs of four guide legs (7). At each end of the guide leg (7) a wheel (4) is attached so that the apparatus can move along the inner surface of the pipe (1). Apparatus further comprises low pressure Hg ultraviolet light (UV) lamp (2) for combined UV C - infrared radiation of the inner surface of the pipe (1). A control and a power supply cable (5) is attached to the guide (3) at its rear part. The UV lamp (2) is arranged at the front side of the guide (3) and is controllable so that upon insertions of the apparatus into the pipe, the UV lamp (2) is aligned on the same axis as a longitudinal axis of the pipe (see Figs. 1, 3 and 4).

In another embodiment of the invention an apparatus comprises a guide (3) and an auxiliary guide (3A) from which in radial direction away from each of the two circumferences of the auxiliary guide (3A) extends eight auxiliary legs (7A) at the each end of which auxiliary wheels (4A) are attached so that the apparatus may move centrally along the inner surface of the bended pipe (1). The guide (3) is connected to the auxiliary guide (3A) by means of a flexible connecting member (6) as cardan. The UV lamp (2) is positioned in front part of the auxiliary guide 3A (see Fig. 2).

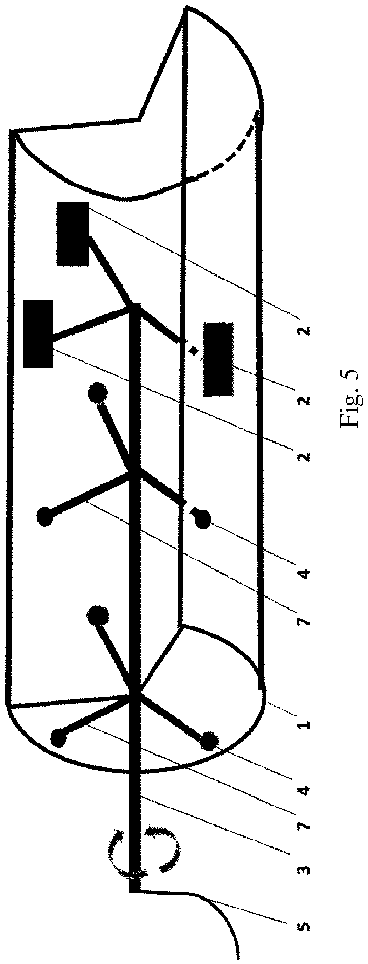

In another embodiment of the invention an apparatus comprises multiple, for example three UV lamps (2) that are attached to a front part of the guide (3). Upon central insertion of the apparatus into the pipe (1), the apparatus is rotated around its longitudinal axis in result of which all UV lamps (2) evenly irradiate inner surface of the pipe (1) for thermosetting coated layer (see Fig. 5).

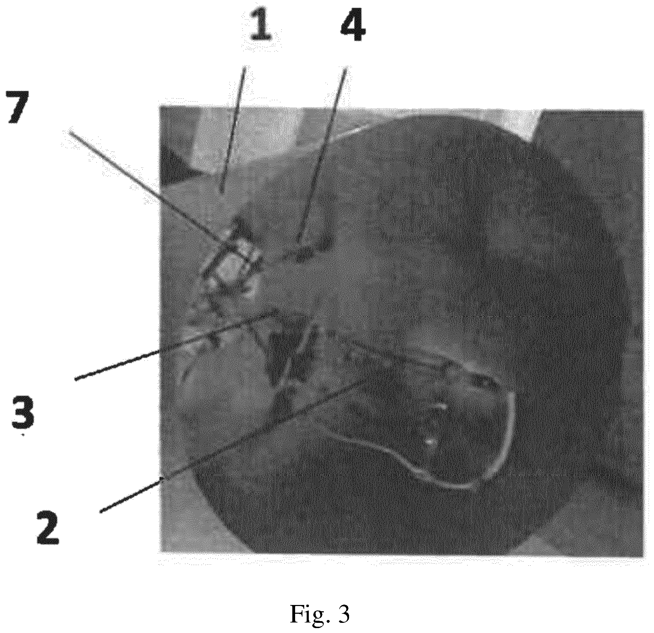

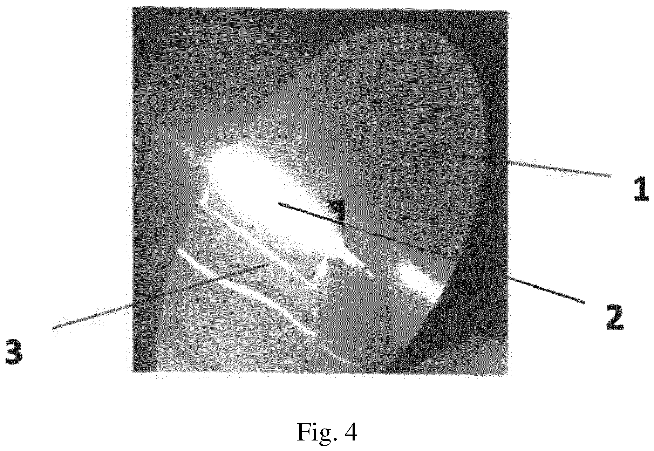

Proposed method is performed and confirmed with the following example. In the example a pipe with a diameter of 40 cm was processed. Coating material was prepared, which includes mixing of Epoxy monomer resin mixing with photo initiator DEUTERON® UV 1250. In the next step a prepared material is applied into an inner surface of the pipe, which is followed by radiation of the inner surface by means of combined UV C and Infrared radiation and moved next when the irradiated part of the coated layer has reached hard cured condition not to be scratched by wheels. As an UV Hg low pressure lamp a tube-type UV C range lamp DRL 1000 (power 1000 W, lamp active length 180 mm, radiation energy - mainly UV C range, was used and the UV lamp is mounted on the aforementioned apparatus, and the apparatus is moved with a speed of 2 m/hour. Apparatus testing is illustrated in Fig. 3 and 4. Obtained surface hardness, surface roughness and chemical resistance confirmed effectiveness of the method and the apparatus of the present invention.

While particular embodiments of the invention have been shown and described, numerous variations alternate embodiments will occur to those skilled in the art. Accordingly, it is intended that the invention be limited only in terms of the appended claims.

### References

1 - a pipe;
2 - UV lamp;
3 - a guide;
3A - an auxiliary guide;
4 - a wheel of a guide leg;
4A - a wheel of an auxiliary guide leg;
5 - a power supply and control cable;
6 - a flexible connecting member;
7 - a leg; and
7A - a leg of an auxiliary guide.

## Claims

1. Apparatus for curing of a thermoset polymer protective coating or paint applied on an inner surface of a pipe (1) or cylindric hollow object (1), **characterized in that** the apparatus comprises a guide (3) having a rear part and a front part defined by the movement of the apparatus within the pipe (1), wherein from the rear part of the guide (3) in radial direction away from each of two circumferences of the guide (3) extend at least four legs (7), at the each end of which a wheel (4) is attached so that the apparatus may move precisely along the inner surface of the pipe (1), and **in that** the front part of apparatus further comprises a low pressure Hg UV (ultraviolet light) lamp (2) for exposition of the inner surface of the pipe (1) to an UV C and infrared or heat irradiation, and **in that** the low pressure Hg UV lamp (2) is adjustable so that upon insertion of the apparatus into the pipe (1) and the low pressure Hg UV lamp (2) is substantially on the same axis as a longitudinal axis of the pipe.

2. The apparatus according to Claim 1, **characterized in that** the low pressure Hg UV lamp (2) is arranged at a front part of the guide (3) in relation to a movement of the apparatus within the pipe and a power supply and a control cable (5) is arranged at a rear part of the guide (3) in relation to the UV lamp (2).

3. The apparatus according to Claim 1 or 2, **characterized in that** the apparatus further comprises auxiliary guide (3A), from which in radial direction away from each of two circumferences of the auxiliary guide (3A) extends at least four auxiliary legs (7A), at the each end of which an auxiliary wheel (4A) is attached so that the apparatus may precisely move centrally along the inner surface of the bended pipe (1), and **in that** the guide (3) is connected to the auxiliary guide (3A) by means of a flexible connecting member (6), and **in that** the low pressure Hg UV lamp (2) is positioned in front of the both guides (3; 3A).

4. The apparatus according to Claim 3, **characterized in that** the flexible connecting member (6) is a cardan.

5. The apparatus according to Claim 1, 3 or 4, **characterized in that** the low pressure Hg UV lamp(-s) (2) is/are positioned in a front part of the apparatus.

6. The apparatus according to any of preceding Claims, **characterized in that** the low pressure Hg UV lamp (2) is configured to generate combined UV radiation in C range, UV-C, with a wave length in the range of 100 nm and 280 nm, and infrared band or heat radiation.

7. Method for curing a polymer protective coating or paint on an inner surface of a pipe (1), wherein the method comprises the following steps:
a) preparation of a paint for coating, which involves mixing of polymer paint such as monomers with photo initiator;
b) application of the prepared paint onto the inner surface of the pipe (1) by spraying or other convential method;
c) applying a combined UV radiation in C range and infrared radiation onto the paint on the inner surface of the pipe (1) using apparatus according to any of claims 1 to 6, wherein the paint is subjected to the irradiation;
d) after the part of the coating surface within the pipe (1) has been cured and achieved a condition hard enough for not to be scratched by the wheels then the apparatus is moved to next part of the pipe for next curring until all inner surface of the pipe (1) is curred.
